# EUROPÄISCHE PATENTSCHRIFT

(11) **EP 1 230 815 B1**
(45) Veröffentlichungstag und Bekanntmachung des Hinweises auf die Patenterteilung: **19.10.2005**
(21) Anmeldenummer: 99953512.3
(22) Anmeldetag: 17.11.1999
(51) Int. Cl.: H04Q 7/22

(54) **VERFAHREN UND SYSTEM ZUR AUSARBEITUNG UND ÜBERMITTLUNG VON SMS-MELDUNGEN IN EINEM MOBILFUNKNETZ**
METHOD AND SYSTEM FOR PREPARING AND TRANSMITTING SMS MESSAGES IN A MOBILE RADIO NETWORK
PROCEDE ET SYSTEME POUR CREER ET ENVOYER DES MESSAGES COURTS (SMS) DANS UN RESEAU RADIOTELEPHONIQUE MOBILE

(43) Veröffentlichungstag der Anmeldung: 14.08.2002
(73) Patentinhaber: Swisscom Mobile AG, 3050 Bern (CH)
(72) Erfinder: MARTSCHITSCH, Andreas, CH-3360 Herzogenbuchsee (CH)
(74) Vertreter: P&TS Patents & Technology Surveys SA
(86) Internationale Anmeldenummer: PCT/CH1999/000545
(87) Internationale Veröffentlichungsnummer: WO 2001/037592

(56) Entgegenhaltungen:
- EP-A- 0 777 394
- WO-A-98/33343
- US-A- 5 752 188

## Beschreibung

### Technisches Gebiet

Die vorliegende Erfindung betrifft ein Verfahren und ein System zur Ausarbeitung und Übermittlung von SMS-Meldungen in einem Mobilfunknetz.

### Stand der Technik

SMS-Meldungen (Short Message Service) sind in GSM-Mobilfunksystemen schon bekannt. Im Gegensatz zum herkömmlichen Sprach- und Datenverkehr wird für die Übertragung dieser Meldungen keine direkte Verbindung zum Empfänger hergestellt, sondern die vom Sender eingegebene Textmeldung wird über eine sogenannte Kurznachrichtenzentrale (Short Message Service Center, abgekürzt SMSC) weitergeleitet.

Damit lassen sich Kurzmeldungen mit maximal 160 alphanumerischen Zeichen zwischen Mobilgeräten verschicken. 160 Zeichen erlauben allerdings nur die Übermittlung von sehr einfachen und kurzen Textmeldungen. Für viele Infodienste und Anwendungen besteht ein Bedürfnis für ein System, das die Übertragung von längeren, wenn möglich unbegrenzten, Meldungen erlaubt.

Ein anderer Nachteil von SMS-Meldungen ist die unvorhersehbare Übertragungszeit. Je nach Einstellungen des SMSC durch den Netzbetreiber werden SMS-Meldungen manchmal erst nach mehreren Stunden übertragen. Für viele Dienste ist diese unabschätzbare Übertragungszeit nicht akzeptierbar.

Die Eingabe von SMS-Meldungen mit den Eingabemitteln von immer kleiner werdenden Mobilfunktelefonen ist ziemlich aufwendig und für viele gelegentliche Benutzer zu kompliziert.

Es wurden ausserdem USSD-Meldungen (Unstructured Supplementary Service Data) beispielsweise im Standard GSM 02.90 vom European Telecommunications Standards Institute (ETSI) definiert und standardisiert. Der Vorteil von USSD-Meldungen gegenüber SMS-Meldungen ist, dass sie benutzerfreundlicher sind, da es für einen Benutzer sehr einfach ist, eine USSD-Dienstmeldung einzugeben. Ausserdem ist die Länge des Datenfeldes in USSD-Meldungen unbegrenzt, so dass auch sehr lange Daten ausgesendet werden können. Ein weiterer Vorteil besteht darin, dass die Übermittlung einer USSD-Meldung schnell und meistens kostenlos erfolgt, da die USSD-Meldung über das Signalisierungssystem, beispielsweise gemäss SS7, weitergeleitet wird.

USSD-Meldungen können jedoch nicht zwischen zwei beliebigen Mobilfunkteilnehmern übermittelt werden. Ein Mobilbenutzer kann USSD-Meldungen nur an einen mit einem dreistelligen Dienstcode angegebenen Dienst bei einem Netzbetreiber senden. USSD-Meldungen sind daher nicht für den Austausch von Textmeldungen zwischen Mobilfunkteilnehmern geeignet.

USSD- und SMS-Meldungen sind an sich schon bekannt. WO-A1-98/33343 beschreibt zum Beispiel eine Identifizierungskarte, die eine Anwendung enthält, mit welcher SMS- oder USSD-Meldungen gesendet werden können, um auf Fernserver zuzugreifen. Mit diesem Verfahren können jedoch keine SMS-Meldungen zwischen Mobilteilnehmern ausgetauscht werden.

US-A-5 752 188 beschreibt ein Verfahren und ein System, um die Signale zwischen einem Mobilgerät und einer Basisstation (beispielsweise einer Kurznachrichtenzentrale) zu kontrollieren.

### Darstellung der Erfindung

Es ist daher ein Ziel dieser Erfindung, ein neues und besseres Verfahren und System vorzuschlagen, mit welchem auch längere Textmeldungen zwischen Mobilfunkteilnehmern in einem Mobilfunknetz ausgetauscht werden können.

Ein anderes Ziel der Erfindung ist es, ein neues und besseres Verfahren und System vorzuschlagen, mit welchem ebenso die Nachteile der SMS-Meldungsübermittlungssysteme sowie die Nachteile der USSD-Meldungsübermittlungssysteme vermieden werden können.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass ein Mobilfunkteilnehmer mit seinem Mobilgerät eine USSD-Meldung aussendet, die einen Dienstcode zur Identifizierung eines SMS-Sendedienstes sowie eine Identifizierung des Empfängers und ein Textfeld umfasst,
dass die benannte USSD-Meldung an ein Location Register weitergeleitet wird,
dass ein mit diesem Location Register verbundenes Gateway die benannte USSD-Meldung in mindestens eine SMS-Meldung konvertiert,
und dass die benannte(n) SMS-Meldung(en) über eine Kurznachrichtenzentrale an den benannten Empfänger weitergeleitet wird (werden).

Dies hat der Vorteil, dass der Mobilfunkteilnehmer, der eine alphanumerische Meldung an einen anderen Mobilfunkteilnehmer senden will, dies mit einer USSD-Meldung machen kann. Solche USSD-Meldungen sind wie schon erwähnt einfach einzugeben und ihrer Länge ist nicht begrenzt.

Diese USSD-Meldung wird in einem Gateway, das entweder mit dem Location Register des besuchten Netzes (VLR, Visitor Location Register) oder mit dem Location Register des Heimnetzes des Mobilfunkteilnehmers verbunden ist, in eine SMS-Meldung konvertiert und über eine Kurznachrichtenzentrale an den angegebenen Empfänger weitergeleitet.

Dies hat den Vorteil, dass auch Formatkonvertierungen durchgeführt werden können, beispielsweise wenn das Alphabet, das für USSD-Meldungen verwendet wird, andere Zeichen oder anders codierte Zeichen umfasst als das Alphabet, welches für SMS-Meldungen gebraucht wird.

Falls das Textfeld der USSD-Meldung mehr als 160 Zeichen umfasst, wird die USSD-Meldung im benannten Gateway in mehrere SMS-Meldungen konvertiert, die hintereinander weitergeleitet werden. Jede dieser SMS-Meldung enthält vorzugsweise eine Reihennummer, damit der Empfänger die Reihenfolge der Textteile rekonstruieren kann.

### Kurze Beschreibung der Figuren

Im folgenden werden anhand der beigefügten Figuren bevorzugte Ausführungsbeispiele der Erfindung näher beschrieben:
Die Fig. 1 zeigt ein Blockdiagramm eines Systems mit einem Mobilgerät, einem besuchten Mobilfunknetz VPLMN, einem Heimmobilfunknetz HPLMN, einer Heimdatei HLR und einer Kurznachrichtenzentrale SMSC.
Die Fig. 2 zeigt ein Blockdiagramm eines Systems mit einem Mobilgerät, einem besuchten Mobilfunknetz VPLMN, einem VLR und einer Kurznachrichtenzentrale SMSC.
Die Fig. 3 zeigt ein Beispiel einer USSD-Meldung.

Obwohl diese Erfindung in mehreren Details den speziellen Fall der Ausführung in einem GSM-Mobilfunknetz beschreibt, wird der Fachmann verstehen, dass dieses Verfahren auch mit anderen Typen von Mobilfunknetzen, durch welche GSM und USSD-Meldungen übertragen werden können, eingesetzt werden kann. Unter anderem kann diese Erfindung auch mit allen WAP-fähigen Netzen eingesetzt werden, in welchen die WAP-Daten entweder über SMS oder über SMS-Bearers übertragen werden können.

### Wege zur Ausführung der Erfindung

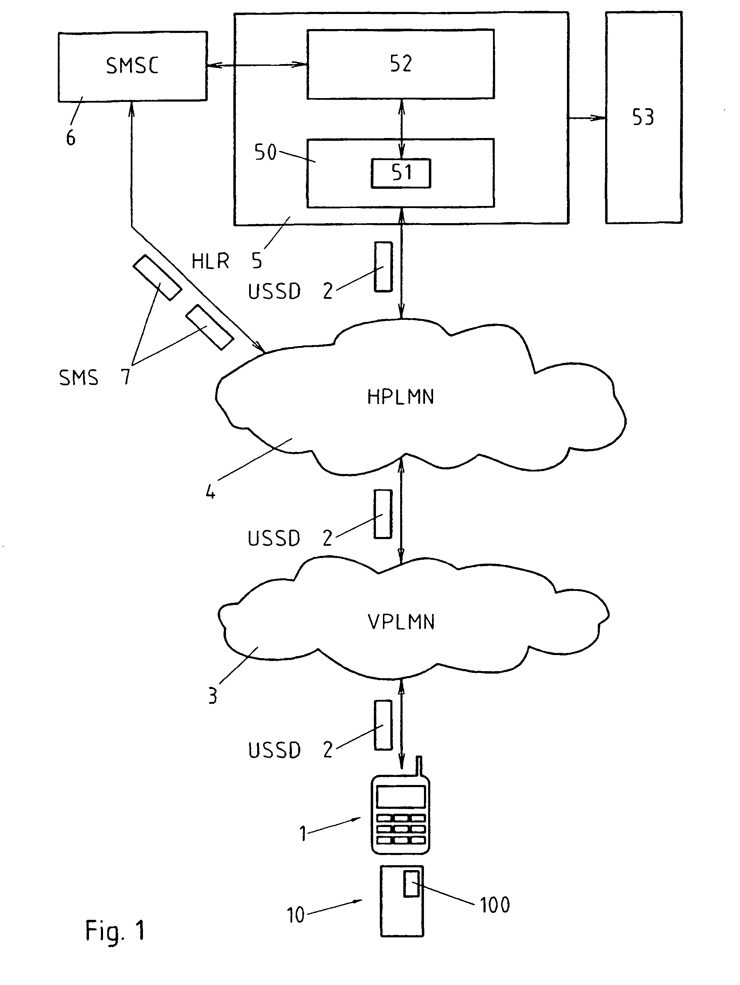

Das Bezugszeichen 1 in Figur 1 bezieht sich auf ein Mobilgerät, beispielsweise ein Mobilfunktelefon für ein GSM-Netz, mit einem Identifizierungsmodul 10, vorzugsweise eine Identifizierungskarte, vorzugsweise eine SIM- (Subscriber Identification Module) oder WIM-(Wireless Application Protocol Identification Module) Chipkarte, die Datenverarbeitungsmittel 100 umfasst, die auf einen nicht dargestellten Speicherbereich zugreifen können. Die SIM-Karte ist vorzugsweise eine JAVA-fähige (JAVA: Warenzeichen von SUN Microsystems) Chipkarte und kann somit Java-Applets, die beispielsweise über eine Luftschnittstelle, beispielsweise über ein Mobilfunknetz oder über eine Schnittstelle im Nahbereich, beispielsweise gemäss Bluetooth, HomeRF oder IrdA empfangen werden, durchführen. Die SIM-Karte kann auch SIM-Application-Toolkit fähig sein, und Applikationen laufen lassen.

Das Mobilgerät 1 und das Identifizierungsmodul 10 sind beide vorzugsweise mit dem SIM Application Toolkit, das in der GSM Technical Specification 11.14 spezifiziert worden ist, kompatibel. Das Identifizierungsmodul 10 ist somit vorzugsweise eine "proaktive" Chipkarte, die Aktionen die vom Mobilgerät 1 durchgeführt werden initiieren kann. Unter anderem kann die proaktive SIM-Karte Texte und Menuelemente auf der Anzeige des Mobilgeräts 1 darstellen lassen, auf selektierte Menuelemente und/oder Ikonen reagieren, einen Dialog mit dem Mobilteilnehmer initiieren, SMS und/oder USSD-Meldungen senden lassen, Hilfstexte anzeigen lassen, usw.

Das Mobilgerät 1 ist in dieser Figur in einem besuchten Mobilfunknetz 3 (VPLMN, Visited Public Land Mobile Network) angemeldet, das vorzugsweise ein Roamingabkommen mit dem Heimnetz 4 (HPLMN, Home Public Land Mobile Network) des Mobilteilnehmers abgeschlossen hat. Das Bezugszeichen 2 zeigt USSD-Meldungen, die vom Mobilgerät 1 gesendet oder empfangen und über die Mobilfunknetze 3 und/oder 4 übertragen werden können.

Das Bezugszeichen 5 bezieht sich auf die Heimdatei, hiernach Home Location Register (HLR) genannt, des Mobilteilnehmers. Dieses Register wird vom Netzbetreiber verwaltet, von welchem der Mobilfunkteilnehmer Identifizierungsmodul 10 bezogen hat. Ein USSD-Handler 50 ist im HLR 5 enthalten oder mit ihm verbunden und prüft alle empfangenen USSD-Meldungen, um zu entscheiden, welche Aktion damit ausgeführt werden soll. Ein Filter 51 in diesem USSD-Handler 50 erkennt unter anderem die für das erfindungsgemässe Verfahren angewandte und speziell markierte USSD-Meldungen und leitet sie an das Gateway 52 weiter, wie weiter unten beschrieben.

Das Gateway 52 empfängt alle vom Filter 51 weitergeleiteten USSD-Meldungen und konvertiert sie in SMS-Meldungen, die an die Kurznachrichtenzentrale 6 (SMSC, Short Message Service Center) weitergeleitet werden. Das Gateway 52 könnte auch in einer Variante direkt in der Zentrale 6 integriert werden. Die Kurznachrichtenzentrale 6 kann dann über bekannte Mechanismen diese SMS-Meldung 7, oder die Reihenfolge von SMS-Meldungen an den angegebenen Empfänger weiterleiten.

Das Bezugszeichen 53 bezieht sich auf ein Verrechnungszentrum, das unter anderem alle vom Mobilteilnehmer ausgesandten SMS-Meldungen verrechnet. Erfindungsgemäss werden auch USSD-Meidungen, die mit dem beanspruchten Verfahren in SMS konvertiert werden, von diesem Verrechnungszentrum verrechnet.

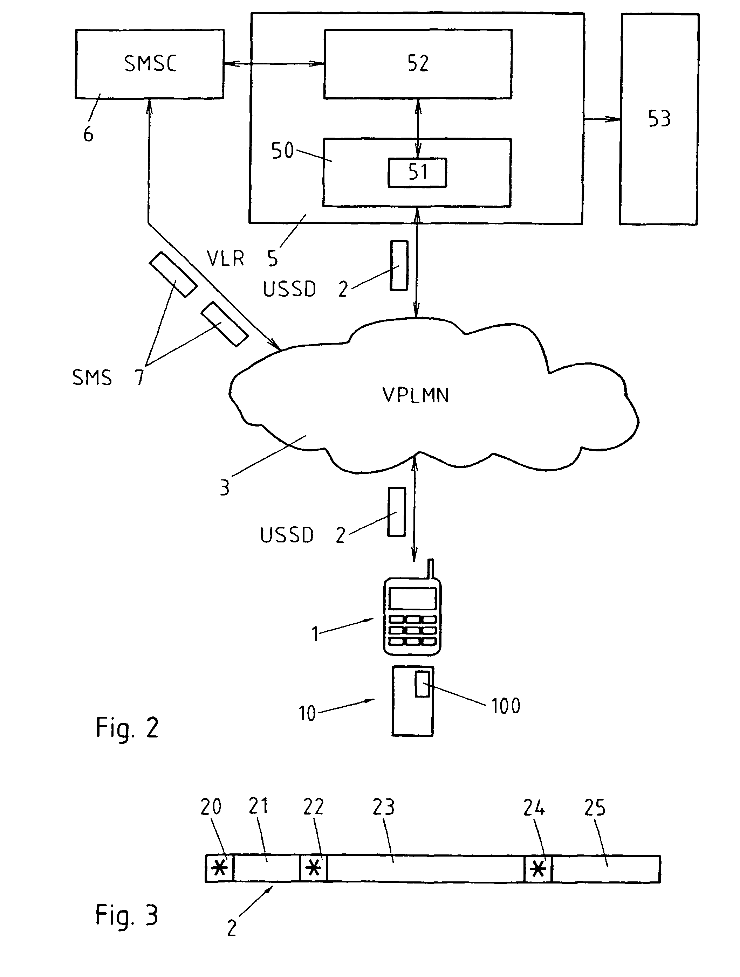

Die Figur 3 zeigt ein Beispiel einer USSD-Meldung 2, die vom Benutzer des Mobilgeräts 1 eingegeben werden kann. Die USSD-Meldung enthält von links nach rechts ein erstes Abgrenzungszeichen 20, in diesem Beispiel ein *, gefolgt von einem dreistelligen Dienstcode 21. Gemäss den oben erwähnten Richtlinien GSM 02.90 kann der Dienstcode jeder mögliche Wert im Bereich von 100 bis 1999 sein. Ist der Dienstcode ein Wert zwischen 100 und 149, muss die USSD-Meldung an die HLR 5 des Mobilfunkteilnehmers weitergeleitet werden. Ist der Dienstcode 21 dagegen ein Wert von 150 bis 1999, kann das Mobilfunknetz 3 (VPLMN), insbesondere die später beschriebene VLR (Visitor Location Register) entscheiden, wie diese USSD-Meldung behandelt werden soll.

Ein zweites Abgrenzungszeichen 22 wird nach dem Dienstcode 21 verwendet, in diesem Beispiel ein *. Nach diesem Zeichen folgt ein Textfeld 23 einer beliebigen Länge, beispielsweise eine Länge grösser als 160 Zeichen. Das Textfeld 23 kann vorzugsweise alphanumerische Zeichen enthalten. Ein nicht dargestellter Alphabetindikator und ein nicht dargestellter Sprachenindikator in der SMS-Meldung 2 definiert vorzugsweise, welches Alphabet und welche Sprache gerade verwendet werden. Zeichen, die nicht zum verwendeten Alphabet gehören können codiert werden, beispielsweise indem deren ASCII-Code eingeben wird.

Ein Abgrenzungszeichen 24 trennt das Textfeld 23 von einem Empfängerfeld 25, das den Empfänger an welchen die Meldung weitergeleitet werden soll identifiziert. Das Empfängerfeld 25 enthält vorzugsweise die MSISDN-Nummer (Rufnummer) des Empfängers, oder eine andere eindeutige Identifizierungsangabe.

USSD-Meldungen 2 mit diesem Format werden vorzugsweise mit Hilfe eines Programms eingegeben, das vorzugsweise in einem Speicherbereich des Identifizierungsmoduls 10 abgelegt ist. Das Programm ist vorzugsweise ein JAVA-Applet und kann somit über eine Luftschnittstelle, beispielsweise über das Mobilfunknetz 3 bzw. 4 und/oder über eine nicht dargestellte Schnittstelle im Nahbereich, beispielsweise eine IrdA, Bluetooth oder HomeRF-Schnittstelle, in das Identifizierungsmodul 10 ferngeladen werden. Das Eingeben der USSD-Meldung wird ausserdem vorzugsweise mit einem im Identifizierungsmodul 10 definierten sogenannten SIM-Toolkitmenu auf der Anzeige des Mobilgeräts 1 erleichtert. Das benannte Programm und die Menuelemente können auch separat, beispielsweise als fernladbarer Programmteil oder als programmierter Datenträger vermarktet werden.

Das SIM-Toolkit-Menu kann beispielsweise vom Mobilfunkteilnehmer verlangen, dass er das Textfeld 23 und das Empfängerfeld 25 eingibt oder aus einem Verzeichnis beispielsweise einem Rufnummerverzeichnis im Identifizierungsmodul oder einem WAP-White Book Verzeichnis selektiert. Die anderen Abgrenzungszeichen 20, 22, 24 und der Dienstcode 21 können dann automatisch von der SIM-Toolkit Anwendung ergänzt werden. In einer Variante kann aber der Mobilfunkteilnehmer die USSD-Meldung 2 ohne die Hilfe des SIM-Toolkit-Menus selber aufsetzen, indem er die notwendigen Zeichen selbst auf der Tastatur seines Mobilfunkgerätes eintippt.

Falls die USSD-Meldung 2 einen Dienstcode im Bereich von 100 bis 149 enthält, wird sie wie oben erwähnt über das Signalisierungssystem SS7 direkt und kostenlos in den HLR 5 des Mobilfunkteilnehmers weitergeleitet. Ein USSD-Handler 50 in diesem HLR 5 nimmt alle ankommenden USSD-Meldungen entgegen und entscheidet anhand des Dienstcodes 21 und/oder anderer Teile der USSD-Meldung 2, wie diese behandelt werden soll. Ein Filterelement 51 im USSD-Handler 50 erkennt insbesondere alle USSD-Meldungen, die den Dienstcode 21 des erfindungsgemässen Dienstes tragen, und leitet sie automatisch an das Gateway 52. Das Filterelement 51 besteht vorzugsweise aus einem Softwaremodul im HLR 5, das die Dienstcodes 21 aller empfangenen USSD-Meldungen mit einem vordefinierten Wert vergleicht, welcher dem erfindungsgemässen Konvertierungsdienst entspricht.

Das Gateway 52 nimmt die vom Filter 51 selektierten Meldungen entgegen und konvertiert sie in SMS-Meldungen 7. Zu diesem Zweck wird das Textfeld 23 in eine oder mehrere Zeichenketten mit je maximal 160 Zeichen gesplittet, die dann in eine entsprechende Anzahl von SMS-Meldungen verpackt werden und mit der im Empfängerfeld 25 angegebenen Empfängeradresse ergänzt werden.

Falls die USSD-Meldung 2 Zeichen enthält, die nicht zum Alphabet für SMS-Meldungen 7 gehören, konvertiert das Gateway 52 diese Zeichen in für SMS-Meldungen 7 zulässige Zeichen. Falls umgekehrt das SMS-Alphabet Zeichen umfasst, die nicht zum USSD-Alphabet gehören und die wie oben erwähnt codiert werden müssen, ersetzt das Gateway 52 diese Codes durch das entsprechende SMS-Zeichen.

Die Konversion, die vom Gateway 52 durchgeführt wird, kann auch vom Dienstcode in der USSD-Meldung abhängig sein. Dies erlaubt, USSD-Meldungen mit einem bestimmten Dienstcode in SMS-Meldungen mit standardisierten Befehlen für einen Infodienst zu konvertieren. Auf diese Weise kann ein Mobilteilnehmer durch USSD auf einen SMS-Infodienst zugreifen.

Falls das Textfeld 23 mehr als 160 Zeichen enthält, wird jede hergestellte SMS-Meldung vorzugsweise im Körper (Body) oder im Vorsatz nummeriert, damit die Reihenfolge der Textteile vom Empfänger rekonstruiert werden kann.

Die vom Gateway 52 hergestellte SMS-Meldung 7 wird dann wie eine herkömmliche SMS-Meldung über die Kurznachrichtenzentrale 6 und das Mobilfunknetz 4 an den ausgewählten Empfänger weitergeleitet. Der Empfänger kann dann diese SMS-Meldung 7 wie eine normale Meldung anzeigen, abspeichern und weiterbearbeiten. Falls die ursprüngliche USSD-Meldung 2 durch das Gateway 52 in mehreren SMS-Meldungen 7 geteilt wurde, sorgt vorzugsweise eine Anwendung in der SIM oder WIM-Karte des Empfangsgerätes dafür, dass diese verschiedenen Teile korrekt und in der ursprünglichen Reihenfolge wiedergegeben werden.

Ein Verrechnungszentrum 53 ist vorzugsweise mit dem HLR 5 verbunden und kann somit dem Mobilfunkteilnehmer die Konvertierung von USSD-Meldungen und die Weiterleitung von SMS-Meldungen mit bekannten Verrechnungsmechanismen, beispielsweise mit einer monatlichen Rechnung oder durch Belastung eines vorausbezahlten Betrages im Identifizierungsmodul 10, verrechnen.

Die Figur 2 zeigt ein anderes Ausführungsbeispiel der Erfindung, in welcher die USSD-Meldungen, die mit dem oben beschriebenen Mechanismus vom Mobilfunkteilnehmer 1 ausgesendet werden, vom Gateway 52 im VLR (Visitor Location Register) des besuchten Mobilfunknetzes 3 (VPLMN) in SMS-Meldungen konvertiert werden. Zu diesem Zweck muss der Mobilfunkteilnehmer, beziehungsweise das oben erwähnte Programm zum Erfassen von USSD-Meldungen, einen Dienstcode 21 im Bereich von 150 bis 199 angeben. In diesem Fall wird diese USSD-Meldung von der Infrastruktur des besuchten Netzes behandelt, beispielsweise von der VLR 5. Ein Filter 51 im USSD-Handler 50 erkennt USSD-Meldungen mit dem Dienstcode des erfindungsgemässen Dienstes und leitet diese Meldungen an das Gateway 52, das sie wie oben beschrieben an die Kurznachrichtenzentrale 6 weiterleitet. Der Filter 51 könnte jedoch programmiert werden, USSD-Meldungen in jedem Fall an das HLR 5 des Mobilfunkteilnehmers oder des Empfängers weiterzuleiten.

In dieser Variante sendet das Verrechnungszentrum 53 vorzugsweise sogenannte Call Details Records (CDR) an das Heimmobilfunknetz des Mobilfunkteilnehmers 1, das dem Mobilfunkteilnehmer diesen Dienst verrechnet.

Der Fachmann wird verstehen, dass die beiden Ausführungsformen der Figuren 1 und 2 gleichzeitig eingesetzt werden können. In diesem Fall kann ein Mobilfunkteilnehmer, der in einem besuchten Mobilfunknetz 3 (VPLMN) angemeldet ist, durch Selektion eines anderen Dienstcodes entscheiden, ob die ausgesandte USSD-Meldung im VLR des besuchten Mobilfunknetzes 3 oder im HLR in seinem Heimnetz in eine SMS-Meldung konvertiert werden soll. Dies hat den Vorteil, dass er somit in vielen Fällen den übermittelten Text über schnelle und kostenfreie USSD bis zum Mobilfunknetz 3 oder 4, in welchem sich der Empfänger befindet senden kann und dass die langsamen und kostspieligen SMS-Meldungen nur für die letzte Strecke innerhalb dieses Empfangsnetzes verwendet werden.

Mit diesem Verfahren können nicht nur Textmeldungen übermittelt werden, sondern auch Datagramms, insbesondere Multimedia-Objekte, Programmteile, Applets, usw., die im Textfeld 23 codiert werden können und vom Gateway 52 in SMS-Datagramms konvertiert werden, vorzugsweise gemäss dem im Patent EP-B1-0 689 368 beschriebenen SICAP-Verfahren, das von der Anmelderin angeboten wird. Damit kann ein Mobilfunkteilnehmer, der ein längeres Objekt, beispielsweise ein Applet, an einen anderen Mobilfunkteilnehmer senden will, dieses Objekt in eine USSD-Meldung verpacken, diese USSD-Meldung an das Gateway 52 adressieren, wo sie automatisch in eine Vielzahl von SMS-Meldungen geteilt wird, die dann im Empfangsgerät wieder zusammengestellt werden. Dies hat den Vorteil, dass sich der Mobilfunkteilnehmer nicht selbst um die Teilung seines Objektes in mehrere Objekten kümmern muss: diese Funktion wird von dem in der Infrastruktur zur Verfügung gestellten Gateway 52 durchgeführt.

Die benannte Anwendung im Identifizierungsmodul 10, mit welcher USSD-Meldungen 2 ausgearbeitet und weitergeleitet werden, kann auch verwendet werden, um diese USSD-Meldungen zu signieren und/oder zu verschlüsseln. Die Meldung wird vorzugsweise mit einem im Identifizierungsmodul 10 gespeicherten elektronischen Zertifikat des Mobilfunkteilnehmers signiert und mit dem öffentlichen Schlüssel des Heimnetzbetreibers und/oder vorzugsweise des Empfängers verschlüsselt. In diesem Fall wird das Gateway 52 vorzugsweise derart programmiert, dass die Konvertierung der USSD-Meldung in eine SMS-Meldung ohne Änderung des Hashwertes des signierten Teils, zum Beispiel des Textfeldes, erfolgt. In diesem Fall wird im Textfeld kein Zeichen, insbesondere kein Leerzeichen ersetzt oder hinzugefügt, damit der Empfänger den Hashwert des Absenders ermitteln und somit die Integrität der Meldung prüfen kann.

Auch wenn der USSD-Handler 50 üblicherweise im HLR 5 implementiert oder direkt mit diesem HLR verbunden ist, könnte seine Funktion auch von einem anderen Server, beispielsweise von einem Server im Internet, ausgeführt werden.

Der Fachmann wird verstehen, dass das Gateway 52 die vom Filter 51 weitergeleiteten USSD-Meldungen auch in andere Formate konvertieren kann, beispielsweise in IP- oder GPRS-Packete, in E-Mails, usw. Der USSD-Handler kann in diesem Fall mehrere Filter des Typs 51 umfassen die verschiedenen Dienstcodes entsprechen, wobei jeder Dienstcode die Konvertierung der USSD-Meldung in ein anderes Format erlaubt. Dadurch kann der Mobilfunkteilnehmer einfach durch Selektion des Dienstcodes entscheiden, in welchem Format der Empfänger seine Meldung erhalten soll. Falls die Anzahl von freien Dienstcodes kärglich ist, kann auch ein Feld in der USSD-Meldung definieren, welche Konvertierung das Gateway 52 durchführen soll.

Das erfindungsgemässe System kann auch eingesetzt werden, um SMS-Meldungen mit einem Mobilgerät oder mit einem Computer auszusenden und durch das Gateway 52 in USSD-Meldungen zu konvertieren, die dann dem USSD-Handler 50 weitergeleitet werden. Damit können auch Geräte die nur SMS-Meldungen, aber keine USSD bearbeiten können, auf USSD-Dienste zugreifen.

### Bezugszeichenliste

- 1: Mobilgerät
- 10: Identifizierungsmodul
- 100: Datenverarbeitungsmittel
- 2: USSD-Meldung
- 20: Abgrenzungszeichen
- 21: Dienstcode
- 22: Abgrenzungszeichen
- 23: Textfeld
- 24: Abgrenzungszeichen
- 25: Empfängerfeld
- 3: Netz
- 4: Netz
- 5: Heimdatei, HLR, VLR
- 50: USSD-Handler
- 51: Filter
- 52: Gateway
- 53: Verrechnungszentrum
- 6: Kurznachrichtenzentrale
- 7: SMS-Meldung

## Patentansprüche

1. Verfahren zur Ausarbeitung und Übermittlung von SMS-Meldungen (7) in einem Mobilfunknetz (3, 4), **dadurch gekennzeichnet,**
**dass** ein Mobilfunkteilnehmer mit seinem Mobilgerät (1) eine USSD-Meldung (2) aussendet, die einen Dienstcode (21) zur Identifizierung eines SMS-Sendedienstes sowie eine Identifizierung des Empfängers (25) und ein Textfeld (23) für Text oder andere codierte Objekte umfasst,
**dass** die benannte USSD-Meldung (2) an einen USSD-Handler (50) weitergeleitet wird,
**dass** ein mit diesem USSD-Handler verbundenes Gateway (52) die benannte USSD-Meldung (2) in mindestens eine SMS-Meldung (7) konvertiert,
und **dass** die benannte(n) SMS-Meldung(en) (7) über eine Kurznachrichtenzentrale (6) an den benannten Empfänger weitergeleitet wird (werden).

2. Verfahren gemäss dem vorhergehenden Anspruch, in welchem die benannte Identifizierung des Empfängers (25) eine MSISDN-Nummer ist.

3. Verfahren gemäss einem der vorhergehenden Ansprüche, **dadurch gekennzeichnet, dass** das benannte Mobilgerät (1) ein GSM Phase 2+ Gerät ist, das mit GSM-Toolkit kompatibel ist,
und dass die benannte USSD-Meldung (2) mit einem GSM-Toolkit-Menu eingegeben wird.

4. Verfahren gemäss dem vorhergehenden Anspruch, **dadurch gekennzeichnet, dass** die GSM-Toolkit-Menuparameter über die Luftschnittstelle in eine SIM-Karte (10) ferngeladen werden.

5. Verfahren gemäss einem der vorhergehenden Ansprüche, **dadurch gekennzeichnet, dass** die benannte Meldung mit Hilfe einer im Identifizierungsmodul (10) des Mobilteilnehmers gespeicherten Anwendung eingegeben wird.

6. Verfahren gemäss dem vorhergehenden Anspruch, in welchem die benannte Anwendung ein JAVA-Applet ist.

7. Verfahren gemäss einem der Ansprüche 5 oder 6, **dadurch gekennzeichnet, dass** die benannte Anwendung über die Luftschnittstelle in das benannte Identifizierungsmodul (10) ferngeladen wird.

8. Verfahren gemäss einem der vorhergehenden Ansprüche, **dadurch gekennzeichnet, dass** die benannte SMS-Meldung (7) ein erstes Alphabet mit Zeichen verwendet die nicht zum Alphabet der benannten USSD-Meldung gehören,
dass der benannte Mobilfunkteilnehmer spezielle Codes eingibt, wenn er die benannten Zeichen verwenden will,
und dass das benannte Gateway diese speziellen Codes in benannte Zeichen konvertiert.

9. Verfahren gemäss einem der vorhergehenden Ansprüche, **dadurch gekennzeichnet, dass** die benannte USSD-Meldung (2) an ein besuchtes Location Register (VLR 5) im besuchten Mobilfunknetz (4) weitergeleitet wird, wenn ein erster Dienstcode (21) eingegeben wird,
und an das Home Location Register (HLR 5) des benannten Mobilfunkteilnehmers, wenn ein zweiter Dienstcode eingegeben wird.

10. Verfahren gemäss einem der vorhergehenden Ansprüche, **dadurch gekennzeichnet, dass** das benannte Location Register (5) mit einem Verrechnungssystem (53) verbunden ist, das dem benannten Mobilfunkteilnehmer die Konvertierung der benannten USSD-Meldung (2) in mindestens eine SMS-Meldung (7) verrechnet.

11. Verfahren gemäss einem der vorhergehenden Ansprüche, **dadurch gekennzeichnet, dass** die benannte USSD-Meldung (2) in mehrere SMS-Meldungen (7) konvertiert wird die hintereinander weitergeleitet werden, wenn die Länge des benannten Textfeldes grösser als die für ein SMS zulässige Länge ist.

12. Verfahren gemäss dem vorhergehenden Anspruch, **dadurch gekennzeichnet, dass** jede SMS-Meldung (7) in einer Reihenfolge von SMS-Meldungen eine Reihennummer enthält.

13. Verfahren gemäss einem der vorhergehenden Ansprüche, **dadurch gekennzeichnet, dass** das benannte Textfeld (23) ein Datagramm enthält.

14. Verfahren gemäss einem der vorhergehenden Ansprüche, **dadurch gekennzeichnet, dass** die benannte USSD-Meldung (2) im benannten Location Register (5) aufgrund des benannten Dienstcodes (21) gefiltert und an das benannte Gateway (52) weitergeleitet wird.

15. System zur Konvertierung und Weiterleitung von Meldungen, durch folgende Merkmale **gekennzeichnet**:
ein USSD-Handler (50), der dazu geeignet ist, über ein Mobilfunknetz (3, 4) empfangene USSD-Meldungen (2) zu empfangen und mit einem Filter (51), die speziell markierten empfangenen USSD-Meldungen (2) zu erkennen,
ein Gateway (52), das dazu geeignet ist, die benannten erkannten speziell markierten USSD-Meldungen in SMS-Meldungen (7) zu konvertieren und über eine Kurznachrichtenzentrale (6) an einen in den benannten USSD-Meldungen (2) identifizierten Empfänger weiterzuleiten.

16. System gemäss dem vorhergehenden Anspruch, welches dazu geeignet ist, die benannten Empfänger aufgrund ihrer MSISDN-Nummer zu identifizieren.

17. System gemäss einem der Ansprüche 15 bis 16, **dadurch gekennzeichnet, dass** das benannte Gateway dazu geeignet ist, eine Alphabetkonvertierung durchzuführen.

18. System gemäss einem der Ansprüche 15 bis 16, **dadurch gekennzeichnet, dass** das benannte Gateway dazu geeignet ist, USSD-Meldungen (2) mit einem bestimmten Dienstcode in SMS-Meldungen (7) mit Befehlen für einen Infodienst zu konvertieren.

19. System gemäss einem der Ansprüche 15 bis 18, **dadurch gekennzeichnet, dass** der benannte USSD-Handler (50) mit einem Location Register (5) verbunden ist.

20. System gemäss dem vorhergehenden Anspruch, **dadurch gekennzeichnet, dass** es dazu geeignet ist, aufgrund der in der benannten USSD-Meldung (2) enthaltenen Identifizierung des benannten Mobilfunkteilnehmers (1) zu entscheiden, ob es die USSD-Meldung (2) an das benannte Gateway (52) oder an das Home Location Register (5) des Mobilfunkteilnehmers weiterleitet.

21. System gemäss einem der Ansprüche 19 bis 20, **dadurch gekennzeichnet, dass** es dazu geeignet ist, aufgrund eines in der USSD-Meldung (2) enthaltenen Dienstcodes (21) zu entscheiden, ob es die USSD-Meldung (7) an das benannte Gateway (52) oder an das Home Location Register (5) des Mobilfunkteilnehmers weiterleitet.

22. System gemäss einem der Ansprüche 15 bis 21, **dadurch gekennzeichnet, dass** es ein Verrechnungssystem (53) umfasst, das dazu geeignet ist, die benannte Konvertierung an den benannten Mobilfunkteilnehmer zu verrechnen.

23. System gemäss einem der Ansprüche 15 bis 22, **dadurch gekennzeichnet, dass** es dazu geeignet ist, USSD-Meldung in mehrere SMS-Meldungen zu konvertieren und diese SMS-Meldungen hintereinander weiterzuleiten, wenn die Länge des benannten Textfeldes länger als die für ein SMS zulässige Länge ist.

24. System gemäss dem vorhergehenden Anspruch, **dadurch gekennzeichnet, dass** es dazu geeignet ist, jeder SMS-Meldung einer Reihenfolge eine Reihennummer hinzuzufügen.

## Claims

1. Method for preparing and transmitting SMS messages (7) in a mobile radio network (3, 4), **characterized in that**:
a mobile radio user sends with his mobile device (1) a USSD message (2) comprising a service code (21) for identifying an SMS sending service as well as an identification of the recipient (25) and a text field (23) for text or other encoded objects,
said USSD message (2) is forwarded to a USSD handler (50),
a gateway (52) connected with this USSD handler converts said USSD message (2) into at least one SMS message (7),
and said SMS message(s) (7) is(are) forwarded over a short message center (6) to said recipient.

2. Method according to the preceding claim, wherein said identification of the recipient (25) is a MSISDN number.

3. Method according to one of the preceding claims, **characterized in that** said mobile device (1) is a GSM phase 2+ device that is compatible with GSM Toolkit,
and **in that** said USSD message (2) is entered with a GSM Toolkit Menu.

4. Method according to the preceding claim, **characterized in that** the GSM Toolkit Menu parameters are downloaded over the air interface in a SIM card (10).

5. Method according to one of the preceding claims, **characterized in that** said message is entered with the aid of an application stored in the identification module (10) of the mobile user.

6. Method according to the preceding claim, wherein said application is a JAVA applet.

7. Method according to one of the claims 5 or 6, **characterized in that** said application is downloaded over the air interface into said identification module (10).

8. Method according to one of the preceding claims, **characterized in that** said SMS message (7) uses a first alphabet with characters that do not belong to the alphabet of said USSD message,
**in that** said mobile radio user enters special codes when he wishes to use said characters,
and **in that** said gateway converts these special codes into said characters.

9. Method according to one of the preceding claims, **characterized in that** said USSD message (2) is forwarded to a Visited Location Register (VLR 5) in the visited mobile radio network (4) when a first service code (21) is entered,
and to the Home Location Register (HLR 5) of said mobile radio user when a second service code is entered.

10. Method according to one of the preceding claims, **characterized in that** said Location Register (5) is connected with a billing system (53) that bills to said mobile radio user the conversion of said USSD message (2) into at least one SMS message (7).

11. Method according to one of the preceding claims, **characterized in that** said USSD message (2) is converted into several SMS messages (7) that are forwarded sequentially when the length of said text field exceeds the length allowable for a SMS.

12. Method according to the preceding claim, **characterized in that** each SMS message (7) in a sequence of SMS messages contains a sequence number.

13. Method according to one of the preceding claims, **characterized in that** said text field (23) contains a datagram.

14. Method according to one of the preceding claims, **characterized in that** said USSD message (2) is filtered in said Location Register (5) on the basis of said service code (21) and forwarded to said gateway (52).

15. System for converting and forwarding messages,
**characterized by** the following features:
a USSD handler (50) suited for receiving USSD messages (2) received over a mobile radio network (3, 4) and for recognizing with a filter (51) specially marked received USSD messages (2),
a gateway (52) suited for converting said recognized specially marked USSD messages into SMS messages (7) and for forwarding them over a short message center (6) to a recipient identified in said USSD messages (2).

16. System according to the preceding claim, suited for identifying said recipients on the basis of their MSISDN number.

17. System according to one of the claims 15 to 16, **characterized in that** said gateway is suited for performing an alphabet conversion.

18. System according to one of the claims 15 to 16, **characterized in that** said gateway is suited for converting USSD messages (2) with a certain service code into SMS messages (7) with orders for an information service.

19. System according to one of the claims 15 to 18, **characterized in that** said USSD handler (50) is connected with a Location Register (5).

20. System according to the preceding claim, **characterized in that** it is suited for deciding on the basis of the identification of said mobile radio user (1) contained in said USSD message (2) whether it forwards the USSD message to said gateway (52) or to the Home Location Register (5) of the mobile radio user.

21. System according to one of the claims 19 to 20, **characterized in that** it is suited for deciding on the basis of a service code (21) contained in the USSD message (2) whether it forwards the USSD message (7) to said gateway (52) or to the Home Location Register (5) of the mobile radio user.

22. System according to one of the claims 15 to 21, **characterized in that** it comprises a billing system (53) suited for billing said conversion to said mobile radio user.

23. System according to one of the claims 15 to 22, **characterized in that** it is suited for converting a USSD message into several SMS messages and for forwarding these SMS messages sequentially if the length of said text field exceeds the length allowable for a SMS.

24. System according to the preceding claim, **characterized in that** it is suited for adding to each SMS message in a sequence a sequence number.

## Revendications

1. Procédé pour la rédaction et la transmission de messages SMS (7) dans un réseau radiomobile (3, 4), **caractérisé en ce**
**qu'**un abonné radiomobile envoie avec son appareil mobile (1) un message USSD (2) qui comprend un code de service (21) pour l'identification d'un service d'envoi d'SMS ainsi qu'une identification du récepteur (25) et un champ de texte (23) pour du texte ou d'autres objets codés,
**que** ledit message USSD (2) est retransmis à un gestionnaire d'USSD (50),
**qu'**une passerelle (52) reliée à ce gestionnaire d'USSD convertit ledit message USSD (2) en au moins un message SMS (7),
et **que** ledit (lesdits) message(s) SMS (7) est (sont) retransmis à travers une centrale de messages courts (6) audit récepteur.

2. Procédé selon la revendication précédente, dans lequel ladite identification du récepteur (25) est un numéro MSISDN.

3. Procédé selon l'une des revendications précédentes, **caractérisé en ce que** ledit appareil mobile (1) est un appareil GSM phase 2+ qui est compatible avec GSM-toolkit,
et **en ce que** ledit message USSD (2) est introduit avec un menu GSM-toolkit.

4. Procédé selon la revendication précédente, **caractérisé en ce que** les paramètres de menu GSM-toolkit sont téléchargés dans une carte SIM (10) à travers l'interface aérienne.

5. Procédé selon l'une des revendications précédentes, **caractérisé en ce que** ledit message est introduit à l'aide d'une application mémorisée dans le module d'identification (10) de l'abonné mobile.

6. Procédé selon la revendication précédente, dans lequel ladite application est un applet JAVA.

7. Procédé selon l'une des revendications 5 ou 6, **caractérisé en ce que** ladite application est téléchargée dans ledit module d'identification (10) à travers l'interface aérienne.

8. Procédé selon l'une des revendications précédentes, **caractérisé en ce que** ledit message SMS (7) utilise un premier alphabet avec des caractères qui n'appartiennent pas à l'alphabet dudit message USSD,
**en ce que** ledit abonné radiomobile introduit un code spécial lorsqu'il veut utiliser lesdits caractères,
et **en ce que** ladite passerelle convertit ces codes spéciaux en desdits caractères.

9. Procédé selon l'une des revendications précédentes, **caractérisé en ce que** ledit message USSD (2) est retransmis à un enregistreur de localisation visité (VLR 5) dans le réseau radiomobile visité (4) lorsqu'un premier code de service (21) est introduit,
et à l'enregistreur de localisation domestique (HLR 5) dudit abonné radiomobile lorsqu'un deuxième code de service est introduit.

10. Procédé selon l'une des revendications précédentes, **caractérisé en ce que** ledit enregistreur de localisation (5) est relié à un système de facturation (53) qui facture audit abonné radiomobile la conversion dudit message USSD (2) dans au moins un message SMS (7).

11. Procédé selon l'une des revendications précédentes, **caractérisé en ce que** ledit message USSD (2) est converti en plusieurs messages SMS (7) qui sont retransmis successivement lorsque la longueur dudit champ de texte est plus grande que la longueur admissible pour un SMS.

12. Procédé selon la revendication précédente, **caractérisé en ce que** chaque message SMS (7) dans une série de messages SMS contient un numéro de série.

13. Procédé selon l'une des revendications précédentes, **caractérisé en ce que** ledit champ de texte (23) contient un datagramme.

14. Procédé selon l'une des revendications précédentes, **caractérisé en ce que** ledit message USSD (2) est filtré dans ledit enregistreur de localisation (5) sur la base dudit code de service (21) et est retransmis à ladite passerelle (52).

15. Système pour la conversion et la retransmission de messages, **caractérisé par** les caractéristiques suivantes:
un gestionnaire d'USSD (50) qui est capable de recevoir un message USSD (2) reçu à travers un réseau radiomobile (3, 4) et de reconnaître avec un filtre les messages USSD (2) reçus spécialement marqués,
une passerelle (52) qui est capable de convertir lesdits messages USSD spécialement marqués reconnus en messages SMS (7) et de retransmettre à travers une centrale de messages courts (6) à un récepteur identifié dans lesdits messages USSD (2).

16. Système selon la revendication précédente, qui est capable d'identifier lesdits récepteurs sur la base de leur numéro MSISDN.

17. Système selon l'une des revendications 15 à 16, **caractérisé en ce que** ladite passerelle est capable d'effectuer une conversion d'alphabet.

18. Système selon l'une des revendications 15 à 16, **caractérisé en ce que** ladite passerelle est capable de convertir des messages USSD (2) avec un certain code de service en des messages SMS (7) avec des ordres pour un service d'information.

19. Système selon lune des revendications 15 à 18, **caractérisé en ce que** ledit gestionnaire d'USSD (50) est relié à un enregistreur de localisation (5).

20. Système selon la revendication précédente, **caractérisé en ce qu'**il est capable de décider sur la base de l'identification dudit abonné mobile (1) contenue dans ledit message USSD (2) s'il doit retransmettre le message USSD (2) à ladite passerelle (52) ou à l'enregistreur de localisation domestique (5) de l'abonné radiomobile.

21. Système selon l'une des revendications 19 à 20, **caractérisé en ce qu'**il est capable de décider sur la base d'un code de service (21) contenu dans le message USSD (2) s'il doit retransmettre le message USSD (7) à ladite passerelle (52) ou à l'enregistreur de localisation domestique (5) de l'abonné radiomobile.

22. Système selon l'une des revendications 15 à 21, **caractérisé en ce qu'**il comprend un système de facturation (53) qui est capable de facturer ladite conversion audit abonné radiomobile.

23. Système selon l'une des revendications 15 à 22, **caractérisé en ce qu'**il est capable de convertir un message USSD en plusieurs messages SMS et de retransmettre ces messages SMS successivement lorsque la longueur dudit champ de texte est plus longue que la longueur admissible pour un SMS.

24. Système selon la revendication précédente, **caractérisé en ce qu'**il est capable d'ajouter un numéro de série à chaque message SMS d'une série.
